# EUROPÄISCHE PATENTSCHRIFT

(11) **EP 1 226 372 B1**
(45) Veröffentlichungstag und Bekanntmachung des Hinweises auf die Patenterteilung: **30.06.2004**
(21) Anmeldenummer: 01965083.7
(22) Anmeldetag: 07.07.2001
(51) Int. Cl.: F16H 25/20

(54) **MÖBELANTRIEB**
FURNITURE DRIVE
DISPOSITIF D'ENTRAINEMENT POUR MEUBLE

(30) Priorität: 09.08.2000 DE 20013672 U
(43) Veröffentlichungstag der Anmeldung: 31.07.2002
(73) Patentinhaber: Dewert Antriebs- und Systemtechnik GmbH & Co. KG, 32278 Kirchlengern (DE)
(72) Erfinder: ROITHER, Andreas, 33649 Bielefeld (DE)
(74) Vertreter: Dantz, Jan Henning
(86) Internationale Anmeldenummer: PCT/EP2001/007809
(87) Internationale Veröffentlichungsnummer: WO 2002/012755

(56) Entgegenhaltungen:
- EP-A- 0 357 575
- DE-U- 29 906 081
- US-A- 2 979 034
- US-A- 4 652 781

## Beschreibung

Die Erfindung betrifft einen Möbelantrieb mit den Merkmalen des Oberbegriffs von Anspruch 1 bzw. 11.

Bei einem bekannten Möbelantrieb ist die Steigung der Spindel so groß, dass ab einer bestimmten Belastung die Selbsthemmung nicht mehr ausreicht. Es ist deshalb notwendig, dass an geeigneter Stelle eine Bremseinrichtung montiert ist, die vorzugsweise mit der Spindel zusammenwirkt. Dadurch wird sichergestellt, dass das an den Möbelantrieb angeschlossene Bauteil in jeder beliebigen Stellung bei abgeschaltetem Antriebsmotor in dieser Stellung verbleibt.

Aus der gattungsgemäßen DE 299 06 081 U1 ist ein Linearantrieb bekannt, bei dem beim Hochfahren des Bauteiles die Spindel über die Schnecke und das damit in Kämmeingriff stehende Schneckenrad angetrieben wird. Der Linearantrieb ist zusätzlich mit einem Bremsschneckentrieb ausgestattet, der so ausgelegt ist, dass der die Spindel antreibende Antriebszug blockiert wird, wenn der Antriebsmotor ausgeschaltet wird. Dieser Bremsschneckentrieb besteht aus einem mit dem die Spindel antreibenden Schneckenrad in Wirkverbindung stehenden weiteren Schneckenrad, welches mit einer zweiten Schnecke in Kämmeingriff steht. Wird bei eingeschaltetem Antriebsmotor die Last abgesenkt, wird über einen Mitnehmer das Schneckenrad des Bremsschneckentriebes in Drehung versetzt. Dadurch wird auch die damit in Kämmeingriff stehende Schnecke angetrieben, sodass sinngemäß der Bremsschneckentrieb rückwärts angetrieben wird. Die erzeugte Bremskraft lässt sich durch den Wirkungsgrad des Bremsschneckentriebes bestimmen. Der Mitnehmer ist bei dieser Ausführung ein Federelement, dessen Windungen in dem Ringspalt zwischen der Innenfläche der Bohrung des Schneckenrades und der auf den Ansatz des die Spindel treibenden Schneckenrades liegen.

Der Erfindung liegt die Aufgabe zugrunde, einen Möbelantrieb der beschriebenen Art so zu gestalten, dass die sich bei einer Belastung ergebenden Kräfte ausgenutzt werden, um die Last bei abgeschaltetem Antriebsmotor zu halten.

Die gestellte Aufgabe wird mit den Merkmalen der Ansprüche 1 bzw. 11 gelöst. Gemäß einem ersten Vorschlag steht die weitere Schnecke mit dem Schneckenrad in Kämmeingriff steht, wobei die weitere Schnecke in Richtung ihrer Drehachse verschiebbar ist und dabei mit der Bremseinrichtung derart zusammenarbeitet, dass in der einen Drehrichtung des Schneckenrades die Bremseinrichtung gelöst und in der entgegengesetzten Drehrichtung in die Lasthaltestellung bringbar ist.

Durch die erfindungsgemäße Gestaltung des Möbelantriebes wird nunmehr die Bewegung der Schnecke in ihrer Axialrichtung gegebenenfalls verstärkt ausgenutzt, um die Bremseinrichtung zu betätigen. Die Bremseinrichtung wird so ausgelegt, dass sie auch im Dauerbetrieb die Last hält. Sie ist außerdem so ausgelegt, dass auch bereits ein relativ geringer Verschiebeweg der Schnecke ausreicht, um die Bremseinrichtung zu lösen oder in die Lasthaltestellung zu bringen. Die Bremseinrichtung ist zweckmäßigerweise so ausgelegt, dass sie gelöst wird, wenn die Schnecke in Lastdrehrichtung rotierend angetrieben ist, d.h. wenn ein zu verstellendes Möbelbauteil nach oben geschwenkt bzw. verfahren wird. Daraus ergibt sich, dass die Bremseinrichtung in die Lasthaltestellung gebracht wird, wenn der Antriebsmotor abgeschaltet wird und das Möbelbauteil in der jeweiligen Stellung verbleiben soll.

Die Bremseinrichtung weist einen durch eine Druckfeder belasteten Bremskörper auf, der in der Lasthaltestellung der Bremseinrichtung mit der Schnecke formschlüssig in Eingriff steht und in der Lösestellung außer Eingriff mit dieser steht. In der Lasthaltestellung verstärkt deshalb die Schnecke den Bremseffekt, während in der Lastdrehrichtung der Schnecke keine Bremskraft überwunden werden muss. Es ist deshalb zweckmäßig, wenn der Bremskörper an der der Schnecke zugewandten Seite eine Axialführung für einen entsprechend gestalteten Bereich der Schnecke aufweist. Der Endbereich der Schnecke wird dann exakt in der Axialführung geführt. Konstruktiv lässt sich diese Axialführung einfach ausführen, wenn sie aus einem Sackloch oder einer Bohrung besteht, und dass die Schnecke einen axial darin verfahrbaren Zapfen derart aufweist, dass in der Außereingriffstellung der Schnecke mit dem Bremskörper die Schnecke frei drehbar ist.

Die formschlüssige Verbindung des Bremskörpers mit der Schnecke lässt sich in einfachster Weise herstellen, wenn das der Schnecke zugewandte Ende des Bremskörpers eine Stirnverzahnung und die Schnecke im an dem Zapfen angrenzenden Bereich eine entsprechende Gegenverzahnung aufweist. Die Verzahnung und die Gegenverzahnung sind so ausgelegt, dass der relativ geringe Verschiebeweg der Schnecke ausreicht, daß in der Lastdrehrichtung der Schnecke die Verzahnung außer Eingriff mit der Gegenverzahnung kommt. Zur Führung des Bremskörpers von der Lasthaltestellung in die Lösestellung ist es zweckmäßig, wenn es an der der Schnecke abgewandten Seite einen Lagerzapfen aufweist, der axial verschiebbar in einem festen Lager gelagert ist, und dass der mittlere Bereich des Bremselementes gegenüber den beiden Endbereichen einen im Durchmesser größeren Ring aufweist. Damit die Bremskraft in der Lasthaltestellung ausreichend groß ist, ist es zweckmäßig, wenn sich an der der Schnecke zugewandten Seite des Mittelteils des Bremskörpers ein Bremsring abstützt, der sich mit seiner anderen Ringfläche an einem ortsfesten Bauteil, vorzugsweise am Gehäuse des Möbelantriebes abstützt. Damit der mit der Schnecke in Eingriff bringbare Bremskörper mit einer ausreichenden Axialkraft gegen den Bremsring gedrückt wird, ist vorgesehen, dass auf das Mittelteil des Bremskörpers an der der Schnecke abgewandten Seite eine Druckfeder wirkt.

Die mit der Bremseinrichtung zusammenwirkende Schnecke kann in verschiedenen Anordnungen zum Schneckenrad stehen. So kann die mit der Bremseinrichtung zusammenwirkende weitere Schnecke im Winkelversatz zu der direkt vom Antriebsmotor angetriebenen Schnecke stehen. Dieser Winkelversatz beträgt vorzugsweise 180°. Bei einer solchen Ausführung kann der Wirkungsgrad erhöht werden, wenn das Schneckenrad als Doppelschneckenrad ausgebildet ist und mit zwei umlaufenden Verzahnungen ausgestattet ist. Das Doppelschneckenrad kann aus zwei miteinander verbundenen Einzelschneckenrädern hergestellt werden oder es kann auch ein einstückiges Rad sein.

Gemäß einem zweiten Vorschlag zur Lösung der gestellten Aufgabe ist vorgesehen, dass die Schnecke mit einem Antriebszapfen des Antriebsmotors antriebstechnisch gekoppelt ist, beispielsweise über einen Riemen, eine Räderkette oder dergleichen, daß die Schnecke mit dem Schneckenrad in Kämmeingriff steht und dass die Schnecke in Richtung ihrer Drehachse verschiebbar ist und dabei mit der Bremseinrichtung derart zusammenarbeitet, dass in der einen Drehrichtung des Schneckenrades die Bremseinrichtung gelöst und in der entgegengesetzten Drehrichtung in die Lasthaltestellung bringbar ist. Dadurch werden die gleichen Vorteile wie zuvor aufgeführt, erreicht.

Anhand der beiliegenden Zeichnungen wird die Erfindung noch näher erläutert. Es zeigen:
- Figur 1: den erfindungsgemäßen Möbelantrieb in einer Teildraufsicht,
- Figur 2: rein schematisch die Anordnung von zwei einem Schneckenrad zugeordneten Schnecken und
- Figur 3: die Anordnung von zwei einem Doppelschneckenrad zugeordneten Schnecken rein schematisch.

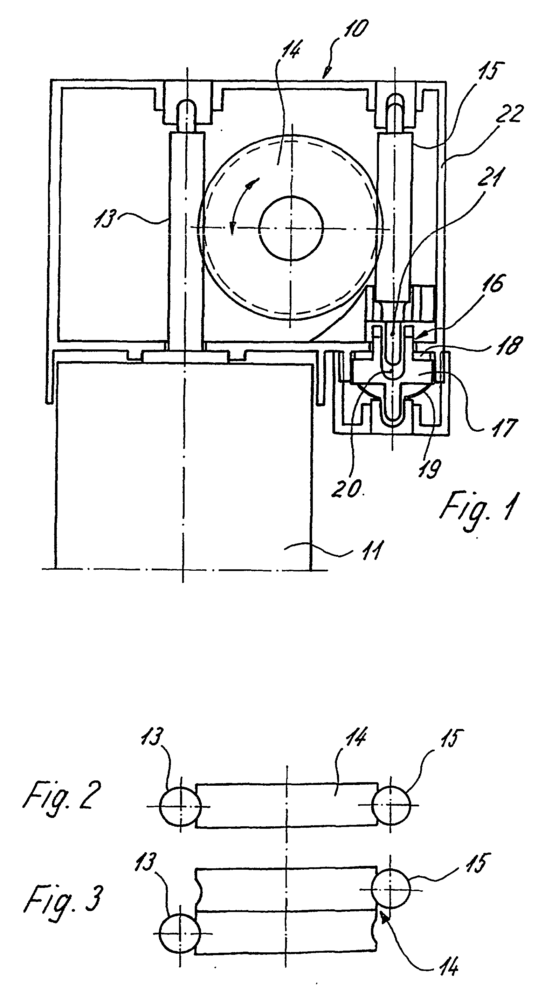

Der erfindungsgemäße Möbelantrieb ist in der Figur 1 aus Gründen der vereinfachten Darstellung nur teilweise dargestellt. Der Möbelantrieb 10 enthält einen Antriebsmotor 11, auf dessen Abtriebszapfen eine Schnecke 13 drehfest aufgesetzt ist. Die Schnecke 13 steht mit einer Schneckenrad 14 in Eingriff, welches eine nicht dargestellte Spindel antreibt. Mit dem Schneckenrad 14 steht gemäß der Darstellung nach der Figur 1 eine weitere Schnecke 15 in Eingriff, die um einen Winkel um 180° gegenüber der Schnecke 13 versetzt ist. Die Schnecken 13 und 15 stehen demnach achsparallel zueinander. Der Schnecke 15 ist eine Bremseinrichtung 16 funktionell zugeordnet, die im wesentlichen aus einem Bremskörper 17, einem Bremsring 18 und einer Druckfeder 19 besteht. Die Mittellängsachsen des Bremskörpers 17 und der Schnecke 15 fluchten zueinander. An der der Schnecke 15 zugewandten Seite ist der Bremskörper 17 mit einem Ansatz ausgestattet, in den ein Sackloch 20 eingebracht ist, in dem ein Zapfen 21 der Schnecke 15 geführt, jedoch axial verschiebbar ist. Dieser Ansatz des Bremskörpers 17 ist an der dem Schnekkenrad 14 zugewandten Seite mit einer Stirnverzahnung versehen, die in noch näher beschriebener Weise mit einer Gegenverzahnung des Zapfens 21 durch eine Verschiebung der Schnecke 15 in Eingriff gebracht werden kann. Die Druckfeder 19 liegt an der gegenüberliegenden Seite und drückt eine Ringfläche des im Durchmesser größeren Mittelteils des Bremskörpers 17 gegen den Bremsring 18, der sich mit seiner anderen Ringfläche am Gehäuse 22 des Möbelantriebes abstützt. Wie durch den Doppelpfeil angedeutet, wird das Schneckenrad 14 in beiden Drehrichtungen gedreht. Demzufolge auch die beiden Schnecken 13 und 15. Wenn ein nicht dargestelltes Möbelbauteil mittels des Möbelantriebes 10 nach oben verfahren wird, dreht sich das Schneckenrad 14 so, daß die Gegenverzahnung der Schnecke 15 durch eine entsprechende Verschiebung außer Eingriff mit der Verzahnung des Bremskörpers 17 kommt. Die Bremseinrichtung 16 ist demzufolge unwirksam. Wird der Antriebsmotor 11 abgeschaltet, dreht sich das Schneckenrad 14 unter Einwirkung einer Last ein klein wenig zurück, wodurch die Schnecke 15 in Richtung zum Bremskörper 17 verfahren wird. Es folgt demzufolge eine Zwangskoppelung der Schnecke 15 mit dem Bremskörper 17. Durch den Druck der Feder 19 wird eine relativ hohe Bremskraft aufgebracht, so daß die Last sicher gehalten wird. Wird der Antriebsmotor 11 so geschaltet, daß der Möbelantrieb entgegen der Lastrichtung motorisch verstellt wird, werden auf die Schnecke 15 Axialkräfte in einer solchen Größe übertragen, die bewirken, daß der Bremskörper 17 entgegen der Wirkung der Druckfeder 19 ebenfalls ein klein wenig verfahren wird, so daß die Bremseinrichtung 16 gelöst ist. Wird der Antriebsmotor 11 wieder abgeschaltet, verringert sich die auf die Schnecke 15 wirkende Axialkraft, wodurch sich die Bremswirkung wieder erhöht.

Die schematische Anordnung der beiden Schnecken 13, 15 zum Schneckenrad 14 zeigt die Figur 2. Bei dieser Ausführung verlaufen die Schnecken 13, 15 achsparallel zueinander. Bei der Ausführung nach der Figur 3 ist das Schneckenrad 14 ein Doppelschneckenrad, welches zwei nebeneinander liegende Verzahnungen aufweist. Dadurch wird der Wirkungsgrad erhöht. Die Schnecken 13, 15 sind jedoch wiederum um 180° zueinander versetzt, stehen parallel zueinander, sind jedoch, in Richtung der Drehachse des Schneckenrades 14 gesehen, gegeneinander versetzt.

In nicht dargestellter Weise könnte der Möbelantrieb 10 ausschließlich mit der Schnecke 15 ausgestattet sein. Da sie im Versatz zum Abtriebszapfen des Motors 11 stehen muß, da Raum für die Bremseinrichtung 16 benötigt wird, könnte der Antrieb der Schnecke 15 über einen Riemen, vorzugsweise einen Zahnriemen oder auch durch eine Räderkette erfolgen. Es wäre jedoch auch möglich, daß die Bremseinrichtung 16 der Schnecke 13 funktionell zugeordnet wird. In diesem Falle müßte die Schnecke 13 gegenüber dem Antrieb axial verfahren werden. Dies wäre beispielsweise möglich, wenn auf den Abtriebszapfen des Antriebsmotors 11 eine Hülse zwar drehfest, jedoch in axialer Richtung verschiebbar aufgesetzt würde. Die Schnecke 13 müßte dann ebenfalls drehfest auf die Hülse, jedoch axial unverschiebbar aufgesetzt sein. Es wäre jedoch auch möglich, daß die Hülse drehfest auf den Abtriebszapfen des Antriebsmotors 11 aufgesetzt würde und die Schnecke 13 gegenüber der Hülse axial verschiebbar angeordnet ist.

Die Erfindung ist nicht auf das dargestellte Ausführungsbeispiel beschränkt. Wesentlich ist, daß die axiale Verschiebung einer Schnecke ausgenutzt wird, um bei Drehung des Schneckenrades 14 bzw. der Schnecke 13 oder 15 in Lastrichtung die Bremseinwirkung unwirksam wird, und daß bei abgeschaltetem Antriebsmotor 11 die Bremseinrichtung zum Halten der Last verwendet werden kann.

## Patentansprüche

1. Möbelantrieb mit einem Antriebsmotor, der eine Schnecke (13) antreibt, die zum Antrieb einer Spindel mit einem Schneckenrad (14) in Kämmeingriff steht,
- wobei die Spindel mit einer Last gekoppelt ist,
- wobei der Möbelantrieb mit einer Bremseinrichtung (16) zum Halten der Last bei abgeschaltetem Antriebsmotor ausgestattet ist,
- wobei eine mit dem Schneckenrad und mit der Bremseinrichtung gekoppelte weitere Schnecke (15) vorgesehen ist, durch welche in Abhängigkeit von der einen Drehrichtung des Schneckenrades (14) die Bremseinrichtung (16) gelöst und in der entgegengesetzten Drehrichtung in die Lasthaltestellung bringbar ist, **dadurch gekennzeichnet,**
- **dass** die weitere Schnecke (15) mit dem Schneckenrad (14) in Kämmeingriff steht,
- und **dass** die weitere Schnecke (15) in Richtung ihrer Drehachse verschiebbar ist und dabei mit der Bremseinrichtung (16) derart zusammenarbeitet, dass in der einen Drehrichtung des Schneckenrades (14) die Bremseinrichtung (16) gelöst und in der entgegengesetzten Drehrichtung in die Lasthaltestellung bringbar ist.

2. Möbelantrieb nach Anspruch 1, **dadurch gekennzeichnet, daß** die Bremseinrichtung (16) einen durch eine Druckfeder (19) belasteten Bremskörper (17) aufweist, der in der Lasthaltestellung der Bremseinrichtung (16) mit der Schnecke (15) formschlüssig in Eingriff steht und der in der Lösestellung der Bremseinrichtung außer Eingriff mit dieser steht.

3. Möbelantrieb nach Anspruch 2, **dadurch gekennzeichnet, daß** der Bremskörper (17) an der der Schnecke (15) zugewandten Seite eine Axialführung für einen entsprechend gestalteten Bereich der Schnecke (15) aufweist.

4. Möbelantrieb nach Anspruch 3, **dadurch gekennzeichnet, daß** die Axialführung des Bremskörpers (17) aus einem Sackloch (20) oder einer Bohrung besteht, und daß die Schnecke (15) einen axial darin verfahrbaren Zapfen (21) derart aufweist, daß in der AuBereingriffstellung der Schnecke (15) mit dem Bremskörper (17) die Schnecke (15) frei drehbar ist.

5. Möbelantrieb nach einem oder mehreren der vorhergehenden Ansprüche 2 bis 4, **dadurch gekennzeichnet, daß** der Bremskörper (17) an der der Schnecke (15) zugewandten Seite mit einer Stirnverzahnung ausgestattet ist, die in der Lasthaltestellung mit einer Gegenverzahnung der Schnecke (15) in Eingriff steht.

6. Möbelantrieb nach einem oder mehreren der vorhergehenden Ansprüche 2 bis 5, **dadurch gekennzeichnet, daß** der Bremskörper (17) an der der Schnecke (15) abgewandten Seite einen Lagerzapfen aufweist, der axial verschiebbar in einem festen Lager gelagert ist, und daß der mittlere Bereich des Bremskörpers (17) gegenüber den beiden Endbereichen einen im Durchmesser größeren Ring aufweist.

7. Möbelantrieb nach Anspruch 6, **dadurch gekennzeichnet, daß** sich an der der Schnecke (15) zugewandten Seite des Mittelteils des Bremskörpers (17) ein Bremsring (18) abstützt, der sich mit seiner anderen Ringfläche an einem ortsfesten Bauteil des Möbelantriebes, vorzugsweise am Gehäuse (22) abstützt.

8. Möbelantrieb nach einem oder mehreren der vorhergehenden Ansprüche 2 bis 7, **dadurch gekennzeichnet, daß** auf das Mittelteil des Bremskörpers (17) an der der Schnecke (15) abgewandten Seite eine Druckfeder wirkt.

9. Möbelantrieb nach einem oder mehreren der vorhergehenden Ansprüche 1 bis 8, **dadurch gekennzeichnet, daß** die der Bremseinrichtung (16) zugeordnete Schnecke (15) im Winkelversatz, vorzugsweise um 180° zu der vom Antriebsmotor (10) angetriebenen Schnecke steht.

10. Möbelantrieb nach Anspruch 9, **dadurch gekennzeichnet, daß** das Schneckenrad (14) als Doppelschneckenrad mit zwei im Versatz zueinander stehenden sowie umlaufenden Verzahnungen versehen ist.

11. Möbelantrieb mit einem Antriebsmotor, der mit einer Schnecke (15) antriebstechnisch gekoppelt ist und eine Spindel über ein Schneckenrad (14) antreibt,
- wobei die Spindel mit einer Last gekoppelt ist,
- wobei die Schnecke (15) des Möbelantriebs mit einer Bremseinrichtung (16) zum Halten der Last bei abgeschaltetem Antriebsmotor ausgestattet ist,
- wobei in Abhängigkeit von der einen Drehrichtung des Schneckenrades (14) die Bremseinrichtung gelöst und in der entgegengesetzten Drehrichtung in die Lasthaltestellung bringbar ist,
**dadurch gekennzeichnet,**
- **dass** die Schnecke (15) mit einem Antriebszapfen des Antriebsmotors antriebstechnisch gekoppelt ist, beispielsweise über einen Riemen, eine Räderkette oder dergleichen,
- **dass** die Schnecke (15) mit dem Schneckenrad (14) in Kämmeingriff steht und
**dass** die Schnecke (15) in Richtung ihrer Drehachse verschiebbar ist und dabei mit der Bremseinrichtung (16) derart zusammenarbeitet, dass in der einen Drehrichtung des Schneckenrades (15) die Bremseinrichtung (16) gelöst und in der entgegengesetzten Drehrichtung in die Lasthaltstellung bringbar ist.

## Claims

1. Furniture drive having a driving motor which drives a worm (13) which is in meshing engagement with a worm wheel (14) in order to drive a spindle,
- the spindle being coupled to a load,
- the furniture drive being equipped with a braking device (16) for retaining the load when the driving motor is switched off,
- a further worm (15) which is coupled to the worm wheel and to the braking device being provided, by means of which worm the braking device (16) can be released as a function of the one direction of rotation of the worm wheel (14) and, in the opposite direction of rotation, can be brought into the load-retaining position, **characterized**
- **in that** the further worm (15) is in meshing engagement with the worm wheel (14),
- and **in that** the further worm (15) can be displaced in the direction of its axis of rotation and, in the process, interacts with the braking device (16) in such a manner that the braking device (16) is released in the one direction of rotation of the worm wheel (14) and, in the opposite direction of rotation, can be brought into the load-retaining position.

2. Furniture drive according to Claim 1, **characterized in that** the braking device (16) has a braking body (17) which is loaded by a compression spring (19) and, in the load-retaining position of the braking device (16), is in engagement in a form-fitting manner with the worm (15), and in the release position of the braking device, is disengaged from the worm.

3. Furniture drive according to Claim 2, **characterized in that** the braking body (17) has, on the side facing the worm (15), an axial guide for a correspondingly designed region of the worm (15).

4. Furniture drive according to Claim 3, **characterized in that** the axial guide of the braking body (17) comprises a blind hole (20) or a bore, and **in that** the worm (15) has a pin (21), which can be moved axially in it, in such a manner that, in the position of the worm (15) in which it is disengaged from the braking body (17), the worm (15) can be rotated freely.

5. Furniture drive according to one or more of the preceding Claims 2 to 4, **characterized in that** the braking body (17) is provided, on the side facing the worm (15), with an end toothing which, in the load-retaining position, is in engagement with a mating toothing of the worm (15).

6. Furniture drive according to one or more of the preceding Claims 2 to 5, **characterized in that** the braking body (17) has, on the side facing away from the worm (15), a bearing pin which is mounted in an axially displaceable manner in a fixed bearing, and **in that** the central region of the braking body (17) has a ring of larger diameter in comparison with the two end regions.

7. Furniture drive according to Claim 6, **characterized in that** a braking ring (18) is supported on that side of the central part of the braking body (17) which faces the worm (15), the said braking ring being supported by its other ring surface on a positionally fixed component of the furniture drive, preferably on the housing (22).

8. Furniture drive according to one or more of the preceding Claims 2 to 7, **characterized in that** a compression spring acts on the central part of the braking body (17) on the side facing away from the worm (15).

9. Furniture drive according to one or more of the preceding Claims 1 to 8, **characterized in that** the worm (15) assigned to the braking device (16) is at an angle offset, preferably through 180º, with respect to the worm which is driven by the driving motor (10).

10. Furniture drive according to Claim 9, **characterized in that** the worm wheel (14) is provided as a double worm wheel with two toothings which are offset from each other and encircle it.

11. Furniture drive having a driving motor which is coupled in terms of drive to a worm (15) and drives a spindle via a worm wheel (14),
- the spindle being coupled to a load,
- the worm (15) of the furniture drive being equipped with a braking device (16) for retaining the load when the driving motor is switched off,
- the braking device being released as a function of the one direction of rotation of the worm wheel (14) and, in the opposite direction of rotation, being able to be brought into the load-retaining position,
**characterized**
- **in that** the worm (15) is coupled in terms of drive to a driving pin of the driving motor, for example via a belt, a wheel chain or the like,
- **in that** the worm (15) is in meshing engagement with the worm wheel (14), and
**in that** the worm (15) can be displaced in the direction of its axis of rotation and, in the process, interacts with the braking device (16) in such a manner that the braking device (16) is released in the one direction of rotation of the worm wheel (15) and, in the opposite direction of rotation, can be brought into the load-retaining position.

## Revendications

1. Dispositif d'entraînement de meuble comportant un moteur d'entraînement qui entraîne une vis sans fin (13), laquelle engrène avec une roue pour vis sans fin (14), pour l'entraînement d'une broche,
- la broche étant couplée à une charge,
- le dispositif d'entraînement de meuble étant équipé d'un dispositif de freinage (16) pour maintenir la charge lorsque le moteur d'entraînement est à l'arrêt,
- une autre vis sans fin (15), couplée à la roue pour vis sans fin et au dispositif de freinage, étant prévue, par laquelle le dispositif de freinage (16) est desserré en fonction d'un sens de rotation de la roue pour vis sans fin (14) et peut-être amené dans la position de maintien de charge dans le sens de rotation opposé, **caractérisé**
- **en ce que** l'autre vis sans fin (15) engrène avec la roue pour vis sans fin (14),
- et **en ce que** l'autre vis sans fin (15) peut se déplacer en direction de son axe de rotation et coopérer ainsi avec le dispositif de freinage (16) de manière que dans un sens de rotation de la roue pour vis sans fin (14), le dispositif de freinage (16) soit desserré et, dans le sens de rotation opposé, puisse être amené dans la position de maintien de charge.

2. Dispositif d'entraînement de meuble selon la revendication 1, **caractérisé en ce que** le dispositif de freinage (16) comporte un corps de freinage (17) soumis à l'action d'un ressort de pression (19), qui dans la position de maintien de charge du dispositif de freinage (16) est en prise, par complémentarité de forme, avec la vis sans fin (15), et qui, dans la position desserrée du dispositif de freinage, est dégagé de celui-ci.

3. Dispositif d'entraînement de meuble selon la revendication 2, **caractérisé en ce que** le corps de freinage (17) présente, sur le côté tourné vers la vis sans fin (15), un guide axial pour une zone de forme correspondante de la vis sans fin (15).

4. Dispositif d'entraînement de meuble selon la revendication 3, **caractérisé en ce que** le guide axial du corps de freinage (17) est constitué d'un trou borgne (20) ou d'un alésage, et **en ce que** la vis sans fin (15) comporte une tige (21) déplaçable axialement à l'intérieur de celle-ci, telle qu'en position de dégagement de la vis sans fin (15) et du corps de freinage (17), la vis sans fin (15) puisse tourner librement.

5. Dispositif d'entraînement de meuble selon une ou plusieurs des revendications 2 à 4 précédentes, **caractérisé en ce que** le corps de freinage (17) est équipé, sur le côté tourné vers la vis sans fin (15), d'une denture droite qui, dans la position de maintien de charge, est en prise avec une contre-denture de la vis sans fin (15).

6. Dispositif d'entraînement de meuble selon une ou plusieurs des revendications 2 à 5 précédentes, **caractérisé en ce que** le corps de freinage (17) comporte, sur le côté tourné à l'opposé de la vis sans fin (15), un pivot qui est monté dans un palier fixe, de manière à pouvoir coulisser axialement, et **en ce que** la zone centrale du corps de freinage (17) présente, face aux deux zones terminales, un anneau de plus grand diamètre.

7. Dispositif d'entraînement de meuble selon la revendication 6, **caractérisé en ce que** sur le côté, tourné vers la vis sans fin (15), de la partie centrale du corps de freinage (17), prend appui un anneau de freinage (18) qui, par son autre surface annulaire, prend appui contre un composant fixe du dispositif d'entraînement de meuble, de préférence contre le carter (22).

8. Dispositif d'entraînement de meuble selon une ou plusieurs des revendications 2 à 7 précédentes, **caractérisé en ce que** sur le côté tourné à l'opposé de la vis sans fin (15), un ressort de pression agit sur la partie centrale du corps de freinage (17).

9. Dispositif d'entraînement de meuble selon une ou plusieurs des revendications 1 à 8 précédentes, **caractérisé en ce que** la vis sans fin (15), associée au dispositif de freinage (16), est décalée angulairement, de préférence de 180°, par rapport à la vis sans fin entraînée par le moteur d'entraînement (10).

10. Dispositif d'entraînement de meuble selon la revendication 9, **caractérisé en ce que** la roue pour vis sans fin (14) est pourvue, en tant que roue double pour vis sans fin, de deux dentures décalées l'une par rapport à l'autre et périphériques.

11. Dispositif d'entraînement de meuble comportant un moteur d'entraînement qui est couplé, par une technique d'entraînement, à une vis sans fin (15) et qui entraîne une broche, par l'intermédiaire d'une roue pour vis sans fin (14),
- la broche étant couplée à une charge,
- la vis sans fin (15) du dispositif d'entraînement de meuble étant équipée d'un dispositif de freinage (16) pour maintenir la charge lorsque le moteur d'entraînement est coupé,
- le dispositif de freinage étant desserré en fonction d'un sens de rotation de la roue pour vis sans fin (14), et dans le sens de rotation opposé, pouvant être amené dans la position de maintien de charge,
**caractérisé en ce que**
- la vis sans fin (15) est couplée, par une technique d'entraînement, à un axe d'entraînement du moteur d'entraînement, par exemple par une courroie, une chaîne pour roue ou similaire,
- la vis sans fin (15) engrène avec la roue pour vis sans fin (14), et
**en ce que** la vis sans fin (15) peut se déplacer en direction de son axe de rotation et coopère ainsi avec le dispositif de freinage (16) de manière à ce que dans un sens de rotation de la roue pour vis sans fin (14), le dispositif de freinage (16) soit desserré et, dans le sens de rotation opposé, il puisse être amené dans la position de maintien de charge.
